# EUROPÄISCHE PATENTSCHRIFT

(11) **EP 2 755 925 B1**
(45) Veröffentlichungstag und Bekanntmachung des Hinweises auf die Patenterteilung: **20.02.2019**
(21) Anmeldenummer: 12774915.8
(22) Anmeldetag: 10.09.2012
(51) Int. Cl.: C02F 3/10

(54) **FESTBETT FÜR DIE AEROBE ODER ANAEROBE ABWASSERREINIGUNG**
FIXED BED FOR AEROBIC OR ANAEROBIC WASTEWATER PURIFICATION
LIT FIXE POUR L'ÉPURATION AÉROBIE OU ANAÉROBIE D'EAUX USÉES

(30) Priorität: 13.09.2011 DE 202011051279 U
(43) Veröffentlichungstag der Anmeldung: 23.07.2014
(73) Patentinhaber: B & M Textil GmbH & Co. KG, 09465 Sehmatal (DE)
(72) Erfinder: SCHOBERTH, Edgar, 95326 Klumbach (DE)
(74) Vertreter: Steiniger, Carmen
(86) Internationale Anmeldenummer: PCT/DE2012/000900
(87) Internationale Veröffentlichungsnummer: WO 2013/037347

(56) Entgegenhaltungen:
- EP-A1- 1 088 793
- DE-B4- 10 343 743
- JP-A- H07 299 487
- US-A- 4 422 930
- US-A1- 2005 269 262
- US-A1- 2008 053 898

## Beschreibung

Die Erfindung betrifft ein Festbett für die aerobe oder anaerobe Abwasserreinigung, mindestens aufweisend einen obenseitigen Rahmen mit an gegenüberliegenden Seitenholmen und/oder Zwischenholmen fixierten Trägerelementen für die Befestigung von textilen, faltbaren, aus nicht verrottbarem Material bestehenden Trägern für Mikroorganismen, einen unteren Rahmen mit Trägerelementen zum Fixieren der textilen Träger an dem unteren Rahmen und Mittel, die die Rahmen miteinander verbinden und auf Abstand halten.

Ein Festbett der gattungsgemäßen Art ist aus der DE 103 43 743 B4 bekannt und umfasst mindestens:
- obenseitige Haltestangen und/oder Tragseile, die an zwei gegenüberliegenden Trägern oder Wänden befestigt sind, für die Befestigung von:
- Trägergarnen, Seilen oder einzelnen monofilen Fasern aus nicht verrottbarem Material, auf die Besiedelungskörper aus Kunststoff für Mikroorganismen in Reihe aufgezogen sind, oder
- textilen, streifen- oder kordelförmigen Besiedelungsstreifen oder solchen mit katalytischem Material oder
- textilen Breitwaren, die eine Tragegrundstruktur für angewirkte Streifen, Kordeln und/oder Felder mit Besiedelungszonen oder solchen mit katalytischem Material aufweisen.

Das bekannte Festbett zeichnet sich dadurch aus, dass in dem Festbett mindestens ein senkrecht angeordnetes, unten verschlossenes oder verschließbares oder mit anderen Rohren verbindbares Rohr und/oder Schlauch mit radialen Austrittsöffnungen vorgesehen ist und dass obenseitig am Rohr oder Schlauch mindestens ein Anschluss für die Einleitung gasförmiger und/oder flüssiger Additive vorgesehen ist, wobei das Festbett ein selbsttragendes Rahmengestell aus mindestens drei Ecksäulen aufweist, von denen mindestens eine eine Hohlsäule ist, die das mindestens eine senkrechte Rohr bildet und radiale Austrittsöffnungen mindestens in Richtung des durch die Ecksäulen begrenzten Raumes aufweist, in dem die Trägergarne, Seile, Fasern, textilen Besiedelungsstreifen oder die Breitware angeordnet sind, welche Ecksäulen mindestens obenseitig über Verbindungsholme miteinander verbunden sind, die zugleich die Träger für die Haltestangen und/oder Tragseile bilden, und das Festbett beabstandet zum Boden des Behälters angeordnet und auf säulenförmigen Beinen oder auf verlängerten Säulenteilen stehend angebracht ist. Mit dieser baulichen Anordnung werden die Zufuhr von gasförmigen oder flüssigen Stoffen verbessert und eine Probeentnahme im Bedarfsfall auf einfache Weise ermöglicht. Zudem ist ein einfacher modularer Aufbau des Festbettes und einer damit bestückbaren Anlage möglich.

In der Druckschrift JP H07 299487 A ist eine Filtervorrichtung für Wasseraufbereitungsgefäße beschrieben. Die Filtervorrichtung weist ein Gestell auf, das aus einzelnen Stäben zusammengesetzt ist. Die Stäbe des Gestells sind jeweils an den Ecken mit einem Dreiecksverbinder verbunden. Zwischen den oberen Stäben sowie den unteren Stäben sind Bänder vorgesehen, an welchen Kontaktmaterial aufweisende Seile angebracht sind. Durch Entfernen der vertikalen Stäbe aus dem Gestell kann die Vorrichtung von einem Gebrauchszustand in einen eine geringere Höhe aufweisenden Transportzustand überführt werden. Das Aufstellen der Filtervorrichtung sowie das Auseinanderbauen der Filtervorrichtung ist durch die Ausbildung des Gestells aus einzelnen Stäben mit Problemen verbunden. So bricht das Gestell, sobald auch nur ein Stab oder ein Dreiecksverbinder entfernt wird, zusammen.

Die Druckschrift US 4 422 930 A beschreibt eine Vorrichtung zur Reinigung von Schmutzwasser. Die Vorrichtung weist zwei obere, horizontal ausgerichtete Stangen und zwei untere horizontal ausgerichtete Stangen auf, die durch vertikale Stangen miteinander verbunden sind. Zwischen den oberen und den unteren Stangen erstrecken sich horizontal angeordnete Stäbe, um welche mäanderförmig seilartige Kontaktelemente gelegt sind. Durch Biegen der oberen und unteren horizontalen Stangen und Verkleinern des Abstandes zwischen den oberen und unteren Stangen kann die Vorrichtung in einen Transportzustand überführt werden. Auch bei dieser Vorrichtung ist der Auf- und Abbau schwierig.

Die Druckschrift US 2005/ 269 262 A1 beinhaltet ein Modul zur Reinigung von Schmutzwasser. Das Modul weist ein quaderförmig ausgebildetes Gestell auf, an welchem vertikal ausgerichtete, textile Lagen angebracht sind, welche als Träger für ein biologisches Material dienen. Unterhalb der textilen Lagen ist eine Belüftungsvorrichtung an dem Gestell vorgesehen, mittels welcher Luft an die Behandlungsstelle gebracht werden kann. Auch diese Vorrichtung weist einen sehr komplexen Aufbau auf.

Aus der DE 41 25 315 C1 ist ein textiles Material als Trägermaterial für die Besiedelung mit Mikroorganismen oder als katalytisches Material für die aerobe oder anaerobe Abwasserreinigung bekannt, das in einen Behälter einhängbar ist, der mit zu behandelndem Abwasser gefüllt ist. Das Material ist eine textile Breitware, die nebeneinander, streifenförmig angeordnet oder miteinander verbundene Bewuchsstreifen bzw. Streifen aus katalytischem Material und stabilisierenden Abstandsstreifen aufweist, die oben Ösen zur Befestigung aufweisen und unten z. B. mit Gewichten beschwert oder befestigt sind. Die Anordnung in einem Abwasserbehälter wird dabei als Festbett bezeichnet.

Aus der DE 195 12 965 ist ein Bioreaktor zur biologischen Behandlung belasteter Abwässer, insbesondere ölbelasteter Abwässer, mit in einem Reaktorbehälter angeordneten Trägerelementen für Mikroorganismen und mit unterhalb der Trägerelemente angeordneten Belüftungsöffnungen bekannt, bei dem die Trägerelemente strangförmig als Netzschläuche ausgebildet und an einer Halterung im Reaktorbehälter gegeneinander frei beweglich aufgehängt sind und in den Netzschläuchen eine Füllung mit einer großen Oberfläche als Träger für die Mikroorganismen angeordnet ist.

Aus der EP 0 164 508 B1 ist ein bandförmiges Trägermaterial bekannt, das über die Länge eines Faulbehälters in diesen eingehängt ist. Zu diesem Zweck ist ein Trägerrahmen vorgesehen, an dem die einzelnen bandförmigen Trägermaterialien aus textilem Gewebe einzeln befestigt sind. Die bandförmigen Kontaktmaterialien können mit dem Trägerrahmen heraufgezogen oder herabgesenkt werden. Sie sind unten an einem gemeinsamen ringförmigen Körper befestigt.

Aus der EP 0 159 535 B1 ist die Verwendung von bandförmigen Trägermaterialien für Mikroorganismen in Abwasserreinigungsanlagen bekannt. Diese bandförmigen Trägermaterialien werden um obere und untere Träger eines Spannrahmens gelegt und damit in den Abwasserbehälter abgesenkt. Das Material ist ein katalytisch wirkendes Material, das in Schleifenform verlegt ist. Dieses Material bewirkt zusammen mit einer Sauerstoffeinbringung unterhalb des Rahmens eine katalytische Oxidation und damit eine Reinigung des Abwassers an dem Trägermaterial.

Aus der DE 36 07 520 A1 sind ferner ein Verfahren und eine Einrichtung zur anaeroben Abwasserreinigung bekannt, bei der zur Erhöhung der für den anaeroben Abbau der im Wasser enthaltenen organischen Verunreinigungen zur Verfügung stehenden Biomasse zusätzliches Gewebematerial für zusätzliche Besiedelungsflächen im Wechsel mit zwei unterschiedlichen Höhen in dem Reaktionsraum (Faulraum) eingebracht ist.

Aus der DE 197 30 839 C2 ist eine Einrichtung zur Abwasserreinigung bekannt, die mindestens ein textiles Material als Trägermaterial für die Besiedelung mit Mikroorganismen oder als katalytisches Material für die aerobe oder anaerobe Abwasserreinigung umfasst, die in einen Behälter einhängbar ist, der mit zu behandelndem Abwasser gefüllt ist. Das textile Material besteht aus nebeneinander angeordneten streifen- oder kordelförmigen Besiedelungsstreifen, die obere Ösen zur Befestigung aufweisen oder um ein Tragegestell herumgelegt und unten mit Gewichten beschwert oder befestigt sind. Über die Länge der Besiedelungsstreifen sind auf gleicher Höhe verteilt an diesen Hülsen oder Halteschlaufen zur Aufnahme mindestens einer querverlaufend einsetzbaren zusätzlichen Beschwerungs-, Fixier- und/oder Haltestange vorgesehen, wobei mindestens eine der zusätzlichen Stangen mit einer Bewegungserzeugungseinrichtung gekoppelt ist.

Ferner ist aus der DE 101 32 546 C1 ein textiles Material für den Einsatz in einer biologischen Kläranlage unter Verwendung von insbesondere faserhaltigem oder geschlauftem Effektmaterial bekannt, wobei in Längsrichtung des textilen Materials neben dem Effektmaterial eine hinsichtlich der mechanischen Belastbarkeit unabhängige Traggrundkonstruktion vorgesehen ist. Aus der Schrift sind ferner eine Trageeinrichtung zum Einsetzen und Einhängen in einen zu behandelnden mit Abwasser gefüllten Klärreaktor mit einem textilen Material der angegebenen Art sowie eine Halterung bekannt, wobei ein in sich tragfähiger Rahmen als Halterung vorgesehen ist. Das textile Material ist dabei elastisch, insbesondere über elastische oder bewegliche Elemente am Rahmen aufgehängt, wobei die elastischen Elemente zwangsbewegbar sind.

Aus der DE 197 53 707 A1 sind Aufwuchskörper für Mikroorganismen aus flexiblem, im Abwasser aufschwimmendem bandförmigen Material bekannt. Diese weisen Aufschwimmkörper auf, die die Auswuchskörper in dem Abwasser schwimmen lassen. Die Aufwuchskörper sind an einem Rohrring befestigt, der an eine Luftzuleitung angeschlossen ist und Injektordüsen für den Luftaustritt aufweist.

Aus der DE 199 47 517 A1 ist ein getauchtes Festbett zur biologischen Behandlung von Fluiden bekannt, das aus Streifen einer fortlaufenden Folie aus Kunststoff besteht. Die Streifen hängen an einer Trageinrichtung herunter und sind vorzugsweise endlos ausgebildet. Durch ein Strecken der Streifen verhält sich das Festbett wie ein solches aus festen Blöcken aus Netzrohren.

Aus der DE 295 21 504 U1 ist eine Belüftungseinrichtung für Kläranlagen mit getauchtem Festbett bekannt, das mindestens einer unterhalb und neben dem getauchtem Festbett installierbaren Belüftungskopf mit einer Vielzahl von Luftaustrittsdüsen zur Zuführung der Luft unter das getauchte Festbett aufweist.

Unter den bekannten Festbetten der angegebenen Arten befinden sich Belüftungseinrichtungen, über die Gas oder Luft in den Reaktor eingegeben wird, um im Reinigungsprozess das Trägermaterial und die Mikroorganismen sowie die Trägermaterialien mit Katalysatoren mit Sauerstoff oder anderen Gasen versorgen zu können.

Voraussetzung für einen einwandfreien Reinigungsprozess eines Festbettes in einer Kläranlage ist eine optimale Belüftung oder bei anderen Verfahren und bei der Verwendung von speziellen Mikroorganismen die kontinuierliche Zuleitung von speziellen Gasen oder auch die Zugabe von Flüssigkeiten als Nährflüssigkeit oder die Zugabe chemisch wirksamer Additive, z. B. um Ausfällungen bestimmter Stoffe zu bewirken. Es hat sich gezeigt, dass diese Zusatzstoffe in befriedigendem Maße in Reaktoren mit Festbetten nach der DE 103 43 743 B4 zugesetzt werden können.

Bei dem eingangs beschriebenem Festbett aber auch bei den anderen Ausführungsformen ist der Nachteil gegeben, dass die Bestückung mit dem entsprechenden textilen Material erst am Verbauungsort erfolgt, nämlich dort, wo das Festbett in einen Abwasserbehälter oder Reaktor einzeln oder zu mehreren eingebracht werden soll. Auch die Montage der Vorrichtung des Festbettes, also die Rahmenkonstruktion, ist - wie aus der DE 103 43 743 B4 ersichtlich - sehr aufwendig. Die gesamte Rahmenstruktur muss ebenfalls erst vor Ort zusammengesetzt werden. Darüber hinaus werden die textilen Mikroorganismenträger gesondert angeliefert und am Aufstellungsort erst in das aufgestellte Gestell manuell eingehängt und verankert. Je nach Größe ist dies vor Ort sehr aufwendig und kann zu unerwünschten Verschmutzungen führen. Darüber hinaus wird das gesamte Gestell, in welchem die Textilien angeordnet werden, zerlegt angeliefert und es müssen alle Teile erst zusammenmontiert werden, um in das aufgestellte Gestell die Textilien, die als Besiedlungsträger dienen, einsetzen zu können.

Ausgehend vom beschriebenen Stand der Technik liegt der Erfindung der Aufgabe zu Grunde, ein Festbett der gattungsgemäßen Art so auszubilden, dass sämtliche Teile des Festbettes zu einer relativ kleinen Verpackungseinheit zusammenfügbar sind, dass diese Einheit bereits die eingebrachten Textilien beinhaltet und ein schneller unkomplizierter Aufbau des Festbettes am Einsatzort ermöglicht wird.

Die Aufgabe löst die Erfindung durch Ausgestaltung des Festbettes gemäß der in Anspruch 1 angegebenen technischen Lehre. Vorteilhafte Weiterbildungen der Erfindung sind in den Unteransprüchen im Detail angegeben.

Nach der Erfindung sind bei einem gattungsgemäßen Festbett die Rahmen mindestens in den Eckenbereichen mit Abstandshaltern versehen, deren Höhe der Materialhöhe der gefalteten Träger zwischen zwei Rahmen entspricht, und die Träger in einer Vormontage vor der Faltung mittels der Trägerelemente an den Seitenholmen und/oder Zwischenholmen der Rahmen fixiert.

Ferner sind seitliche Aufstellelemente oder in senkrechten Durchgangslagern in oder an den Abstandshaltern einsetzbare Säulen vorgesehen, die es ermöglichen, die Rahmen aus einer, eine gestapelte Verpackungseinheit bildenden Position durch Anfügen der seitlichen Aufstellelemente oder durch Einbringen von langen Säulen in die Durchgangslager in eine Gebrauchsposition aufzustellen und in einen Abwasserbehälter einzusetzen. An diesen Aufstellelementen können alle horizontalen Rahmen für die textilen Träger befestigt werden, aber auch unterhalb des unteren Rahmens, ein Belüftungsrahmen, an dem Belüftungselemente befestigt sind, um von unten in das Abwasserbecken Luft oder ein Gas zur Förderung des Bewuchses mit den Mikroorganismen und des Schadstoffabbaus durch die Mikroorganismen eingeben zu können. Ein solcher Belüftungsrahmen kann selbstverständlich auch Bestandteil der Verpackungseinheit sein und die gleichen Abstandsmittel aufweisen wie die anderen Rahmen.

Wenn das Festbett nur einen oberen Rahmen und einen unteren Rahmen aufweist, zwischen denen die Textilien gespannt sind, so reicht es aus, um den Abstand zwischen den beiden Rahmen in dem Verpackungszustand zu bestimmen, dass an einem der Rahmen nach unten bzw. nach oben vorstehend röhrenförmige Abstandshalter vorgesehen sind. Wenn der Rahmen allerdings im Eckenbereich, z. B. mittels dreieckförmiger Verstärkungsbleche, verstärkt sein soll, so empfiehlt es sich, Abstandshalter definierter Höhe an der Unterseite des oberen Rahmens jeweils im Eckenbereich nach unten vorstehend und nach oben vorstehende Abstandshalter an dem darunter befindlichen Rahmen in kongruenter Anordnung vorzusehen, um die Verstärkungsbleche klein ausführen zu können. Der Abstand zwischen zwei Rahmen wird durch die Gesamthöhe der übereinander liegenden Abstandshalter definiert. Das gestapelte Festbett kann auf einer Palette befestigt und transportiert werden. Transportsicherungen wie Netze oder Folienumwicklungen sichern den Verbund. Selbstverständlich können auch andere Sicherungselemente zusätzlich vorgesehen sein.

Da Festbetten eine Höhe von drei und mehr Metern haben können, ist es aber oftmals gewünscht, dass durch Zwischenrahmen und eingelegte Trägerelemente die Textilien über die Länge entlastet werden. Für diese Fälle ist es empfehlenswert, einen oder mehrere Zwischenrahmen vorzusehen. Diese Zwischenrahmen können nun ebenfalls einseitig oder zweiseitig, also oben und unten an den Eckenbereichen jeweils Abstandshalter aufweisen, die zusammen mit dem darüber befindlichen oder darunter befindlichen Rahmen den Verstauraum für die gefalteten Textilien bilden. Wenn die Ecken durch dreieckförmige Bleche verstärkt sind, so können auch hier wieder Halbierungen in der Höhe der Abstandshalter vorgenommen werden, so dass zwei aneinander gefügte Abstandshalter die nominelle lichte Höhe zwischen den benachbarten Rahmen definiert. Diese Höhe hängt letztendlich von der Auswahl des Textils als Mikroorganismenträger ab. Handelt es sich um einen dicken oder rohrförmigen Träger, so ist es ersichtlich, dass bei einem geringen Zwischenraum zwischen den benachbarten eingehängten Textilien eine größere Faltungshöhe benötigt wird und der Abstand zwischen dem Rahmen entsprechend angepasst sein muss, um den gefalteten Träger in dem Zwischenraum verstauen zu können. Der Hohlraum zwischen den benachbarten Rahmen wird vollends durch die gefalteten Textilabschnitte ausgefüllt. Es ist zugleich erkennbar, dass die Rahmen mit den Textilien eine Versandeinheit bilden, die beispielsweise auf einer Transportpalette auf einfache Weise gelagert und verschickt bzw. transportiert werden kann, wobei die Rahmenfläche dem Verwendungszweck entsprechend groß sein kann, z.B. 4 m². Zu dem Gebinde gehören auch seitliche Aufstellelemente, die beispielsweise eine Rahmenstruktur aufweisen können, um an diesen die Rahmen in definierter Höhe und in großen Abständen anschrauben zu können. Zu diesem Zweck weisen solche seitlichen Rahmen ebenfalls Laschen oder Flansche auf, die kongruent zu den Verstärkungsblechen an den Rahmen angeordnet sein können. Wenn ferner kongruente Bohrungen in den Blechen vorgesehen sind, können diese mittels Schrauben verbunden werden. Es versteht sich von selbst, dass die gesamten Rahmen und auch die Bleche aus Edelstahl zu fertigen sind, da sie in der Regel mit aggressivem Abwasser in Berührung kommen. Aus Kunststoff bestehende oder damit überzogene Rahmen und Säulen können aber auch eingesetzt werden. Ein solcher seitlicher Rahmen, der als Aufstellelement dient, wird beispielsweise als Faltrahmen auf den oberen Rahmen des Festbettes beim Transport aufgelegt, kann entnommen und aufgefaltet oder zusammengesteckt und als Aufstellelement für die auseinander zu ziehenden Rahmen für die Textilien verwendet werden. Als Aufstellelement kann also ein Aufstellrahmen oder ein seitlicher Rahmen zum Einsatz kommen. Zwei solche Rahmen werden seitlich an den gegenüberliegenden Seiten der horizontalen Rahmen angefügt und an den Abstandshaltern und/oder den Verstärkungselementen beispielsweise angeschraubt oder angenietet.

Als besonders vorteilhaft hat es sich erwiesen, mindestens in den Eckenbereichen der Rahmen vertikale Aufnahmen für Säulen vorzusehen, die mindestens eine Länge aufweisen, die der Abstandsweite zwischen dem oberen und dem unteren Rahmen entspricht, und in die Säulen einführbar sind. Nach der Bestückung der Rahmen mit den textilen Trägern wird der obere Rahmen in Richtung des darunter befindlichen Rahmens bei gleichzeitiger Faltung des Trägermaterials abgesenkt und bildet mit diesem - nach dem Entfernen der Säulen oder des Einsetzens kürzerer Säulen - eine kompakte Versandeinheit. Am Aufstellort werden die langen Säulen oder Verlängerungen auf die kürzeren aufgesetzt und die Rahmen nach oben in Position gebracht. Im hochgestellten Zustand werden die Rahmen an den Säulen fixiert, während der untere Rahmen als Beschwerungsrahmen für die Träger dient und auf den Säulen gleitet oder in einer Spannposition der Träger an den Säulen fixierbar ist. Es ist ersichtlich, dass eine solche Konstruktion den Vorteil hat, dass die Aufnahmen an den Rahmen auch im gestapelten Zustand über Säulen miteinander verbunden werden können. Diese Säulen können in einer Ausgestaltungsform nach dem Transport durch aufgesteckte Säulenteile verlängert oder durch lange Säulen ersetzt werden. Im ersteren Fall ist eine Verbindung zwischen dem aufgesteckten Säulenteil und dem bereits eingefügten Säulenteil erforderlich. Der obere horizontale Rahmen und der ggf. vorgesehene Zwischenrahmen können auf den so gebildeten langen Säulen verschoben und in gewünschter Höhe platziert werden.

In den Säulen können beispielsweise auch Bohrungen eingebracht sein, so dass durch eingefügte Bolzen eine Höhenlagensicherung der horizontalen Rahmen möglich ist. Der untere Rahmen kann als Beschwerungsrahmen frei verschiebbar angeordnet sein, er kann aber auch nach unten gedrückt werden, um das Textil zu spannen. Durch Vorsehen einer entsprechenden Lochreihe in der Mantelwand der Säulen kann hier jede beliebige Höhe eingestellt werden.

Grundsätzlich kann die Luftzufuhr in einem Abwasserbecken gesondert vom Festbett erfolgen. Es ist aber auch möglich, wie dies bekannt ist, unter dem Festbett eine Belüftung direkt vorzusehen. In weiterer Ausgestaltung der Erfindung sind die Belüftungselemente in einem Belüftungsrahmen vorgesehen, der unterhalb des unteren horizontalen Rahmens angebracht ist. Der Belüftungsrahmen sollte die gleichen Abmessungen aufweisen wie die darüber befindlichen Bestückungsrahmen für die Textilien, so dass hierüber ein unmittelbar Verbund auch mit dem Belüftungsrahmen hergestellt werden kann und auch der Abstand z. B. über die Säulen oder die seitlichen Aufstellelemente so eingestellt werden kann, dass eine optimale Belüftung der Vorhänge erreicht werden kann. Bei Verwendung von in den Eckenbereichen angeordneten Säulen zur Bildung der Abstände zwischen den horizontalen Rahmen können zur Bildung eines Bodenabstandes diese Säulen auch nach unten durch die Aufnahmen an dem Belüftungsrahmen hindurch gesteckt und auf dem Boden aufgestellt werden. Durch Sicherungselemente, beispielsweise Bolzensicherung, kann dann der Belüftungsrahmen in einer definierten Höhe zum Boden befestigt werden. Selbstverständlich kann auch ein Seitenrahmen als Aufstellelement mit Füßen versehen sein und z. B. an den Abstandshaltern sowohl des Belüftungsrahmens als auch des Horizontalrahmens befestigt werden.

Um zusätzliche Anbauteile anbringen zu können oder auch Haken oder Ösen für eine Hubeinrichtung, sollten die Säulen oder Seitenrahmen, die als Aufstellelemente dienen, nach der Fixierung der Horizontalenrahmen den oberen Rahmen überstehen. Dadurch ist es möglich, hieran beispielsweise Kupplungsstücke für die Verbindung mit Säulen oder benachbarter Festbetten, wie Haken, Ösen oder Abstandshalter anzubringen. Dieser Überstand ist sowohl von Vorteil, wenn für den Transport kurze Säulen zur Anwendung kommen oder im aufgestellten Zustand der Festbetten Langsäulen oder Verlängerungen.

Es ist ersichtlich, dass bei Verwendung von Säulen vor Ort lediglich die Säulen verlängert oder durch lange Säulen ersetzt werden müssen, um die Horizontalrahmen auf diesen Säulen nach oben verschieben zu können, wobei gleichzeitig das gefaltete textile Material sich aushängt. Der Aufbau bietet eine derart einfache Montage, dass diese in kürzester Zeit mit geringem Aufwand realisierbar ist und mit einer Hebevorrichtung, beispielsweise einem Autokran bewerkstelligt werden kann, ohne dass Teile zusammengefügt werden müssen, da die Grundkonzeption nur noch ein Auseinanderziehen vorsieht und beispielsweise auch ein automatisches Einrasten der Horizontalrahmen in den entsprechenden Höhen vorgesehen sein kann. Gleichzeitig wird aber auch das textile Material gestreckt.

Die Ösen oder Haken für die Hebevorrichtung können selbstverständlich am oberen Rahmen selbst, zum Beispiel an den Seitenholmen oder Stirnholmen, befestigt sein. Es empfiehlt sich jedoch, diese direkt an den Säulen vorzusehen bzw. in Verlängerung hierzu. An die Rahmen oder auch an die Säulen können selbstverständlich auch Abstandshalter und Befestigungshalter angebracht sein. Diese können beispielsweise bei Ausbildung der Säulen als Vierkantrohr aufgesteckt werden und sind verdrehsicher gelagert und können so zum Beispiel als Wandabstandshalter benutzt werden. Diese können beispielsweise auch Hakenform besitzen, so dass sie in eine Wandöse einhängbar sind, wodurch ein definierter Abstand des Festbettes innerhalb eines Abwasserbehälters zu der Seitenwand hergestellt und zugleich eine stabile Lage sichergestellt wird. Selbstverständlich können auch Verbindungselemente zwischen einem Festbett und einem zweiten, daneben aufgestellten Festbett in gleicher Art und Weise angeordnet vorgesehen sein, wodurch ebenfalls ein fester Verbund zwischen zwei benachbarten Festbetten herstellbar ist.

Wenn rohrförmige Säulen verwendet werden, so können diese aus einem Rohrprofil bestehen und können untenseitig mit den Belüftungselementen des Belüftungsrahmens verbunden werden. Die benötigte Druckluft wird dann über die Hohlprofilsäulen oder einer dieser Säulen den Belüftungselementen über einen untenseitigen Verteiler zugeführt, so dass in gewünschter Weise hierüber die Luft in das Abwasserbecken eingebbar ist, ohne dass besondere Leitungen zu den Belüftungselementen verlegt werden müssen. Solche Säulen, die zugleich als Luftzufuhrsäulen für die Belüftungselemente dienen, können auch nach innen in das Festbett hineinreichende Durchbrüche in Form von kleinen Löchern aufweisen, über die Luft beim Einpressen ebenfalls austreten kann, um die Mikroorganismen mit Sauerstoff zusätzlich versorgen zu können, die die Abwasserreinigung vornehmen und sich an den Textilien ansiedeln bzw. angesiedelt werden.

Als Träger für die Organismen können aus nicht verrottbarem Material bestehende, kordel-, band- oder schlauchförmige Textilien oder eine Breitware mit eingewirkten textilen Einzelschläuchen - in Reihe oder in Gruppen angeordnet - verwendet werden. Es können aber auch Gewebeflächen in einem Schlauchsystem aus ineinander gesteckten textilen Schläuchen zum Einsatz kommen, wobei die Gewebeschläuche mit Luft beaufschlagt werden können. Bevorzugt kann auch eine Breitware aus Besiedelungsstreifen für die Mikroorganismen, kombiniert mit diese voneinander trennenden Abstandsstreifen, verwendet werden. Es können alle textilen Trägermaterialien verwendet werden, die auch in der DE 103 43 743 B4 und in der DE 101 32 546 C1 genannt sind.

Um eine Befestigung an den Trägerelementen der Horizontalrahmen des Textilmaterials vornehmen zu können, können an diesen Ösen zum Einziehen der Trägerelemente angebracht sein. Die Textilien, insbesondere die Breitware, kann auch so gelegt und vernäht sein, dass seitlich Ösen entstehen, die dann auf die Trägerelemente aufgezogen werden. In der Vormontage können in einer Fabrik Roboter für das Aufziehen verwendet werden.

Die Trägerelemente können auch aus miteinander verbindbaren Profilleisten bestehen, bei deren Zusammensetzen die Trägermaterialien eingeklemmt oder beim Verschweißen der Profilleisten mit einschweißbar sind. Insbesondere bei der Verwendung von Breitwaren, deren Fasern Kunststofffasern sind, lässt sich maschinell ein solches Befestigungselement anbringen. Dies kann, wenn entsprechende Verrastungen vorgesehen sind durch Ineinanderverrasten der Profilleisten bei gleichzeitiger Einklemmung der Breitware geschehen. Wenn die Profilleisten aus Kunststoff bestehen, können sie auch so ausgebildet sein, dass sie punktuell miteinander verschweißbar sind. Dabei können einzelne Fasern der Breitware mit eingeschweißt werden oder die Schweißpunkte sind so verlegt, dass die Breitware nur durch Klemmung gehalten ist. Es versteht sich dabei von selbst, dass die Aufnahmen in den Seitenholmen und dem Zwischenholm so auszubilden sind, dass die Trägerelemente, die aus Profilleisten bestehen, daran befestigt werden können.

Um eine vereinfachte Montage in der Vormontage der Textilien zu ermöglich, ist in weiterer Ausgestaltung vorgesehen, dass als Trägerelemente C-Profile vorgesehen sind, die parallel in den Horizontalrahmen angeordnet sind. In diese C-Profile können Halter mit entsprechend ausgebildeten Köpfen verschiebbar eingesetzt werden. Diese Halter tragen Befestigungsleisten, die obenseitig die Textilien miteinander verbinden. Diese Befestigungsleisten können beispielsweise aus zwei miteinander verbindbaren Profilleisten bestehen, die miteinander unlösbar oder lösbar verbindbar sind und beim Verbinden das Trägermaterial einklemmen. Hier gibt es verschiedenste Ausführungsformen.

Da die Vorhänge - bezogen auf ihre Länge von drei Metern und mehr - sehr schwer sind, sollten die Profilleisten miteinander verschraubt oder miteinander über Klemmelemente verklemmt werden. Es ist aber auch möglich, zwischen zwei Profilleisten die Textilware einzuklemmen und die beiden Profilleisten miteinander zu verschweißen, bei welchem Vorgang zugleich die eingelegten Abschnitte der Textilien formschlüssig mit verbunden werden. Um nun solche Profilleisten auf einfache Weise in den C-Profilen mittels Halter halten zu können, sollten die Profilleisten ein schwalbenschwanzförmiges oder C-förmiges Längsprofil aufweisen, so dass die Halter mit einer Halterplatte in diese Profile hineingeschoben werden können. Die Befestigungsleisten können dabei parallel zu den C-Trägern verlaufen oder aber auch in einem rechten Winkel hierzu, so dass sie quer zu den Trägerelementen verlaufen. Dies hängt jeweils von der Ausbildung der Halter und der Anordnung der Befestigungsleisten ab.

Die Profilleisten können aus Kunststoff bestehen, so dass sie, wie zuvor schon beschrieben, miteinander verschweißt werden können. Es können aber auch Rastelemente vorgesehen sein, die ein Verrasten der beiden Profilleisten unter Einklemmung der Textilien miteinander ermöglichen. Diese Profilleisten können beim Austausch der Träger wieder verwendet werden. Zu diesem Zweck können die Profilleisten auch ineinander greifende Musterraster aufweisen, die verschiedene Strukturen besitzen.

Die Erfindung wird nachfolgend anhand des in der Zeichnung dargestellten Ausführungsbeispiels ergänzend erläutert:
In den Zeichnungen zeigen:
   - FIG. 1: ein Festbett nach der Erfindung als Verpackungseinheit ohne das flexible Trägermaterial,
   - FIG. 2: das in FIG 1 in einer Verpackungseinheit dargestellte Festbett im aufgestellten Zustand zum Einbringen in einen Abwasserbehälter,
   - FIG. 3: das Festbett nach FIG. 2 im zerlegten Zustand in Form einer Explosionszeichnung,
   - FIG. 4: Befestigungsleisten für einen textilen Träger aus nicht verrottbarem Material, eingehängt in ein Trägerelement, in perspektivischer Darstellung, mit abgesetzt gezeichnetem Halter und
   - FIG. 5: zwei miteinander verbindbare Befestigungsleisten.

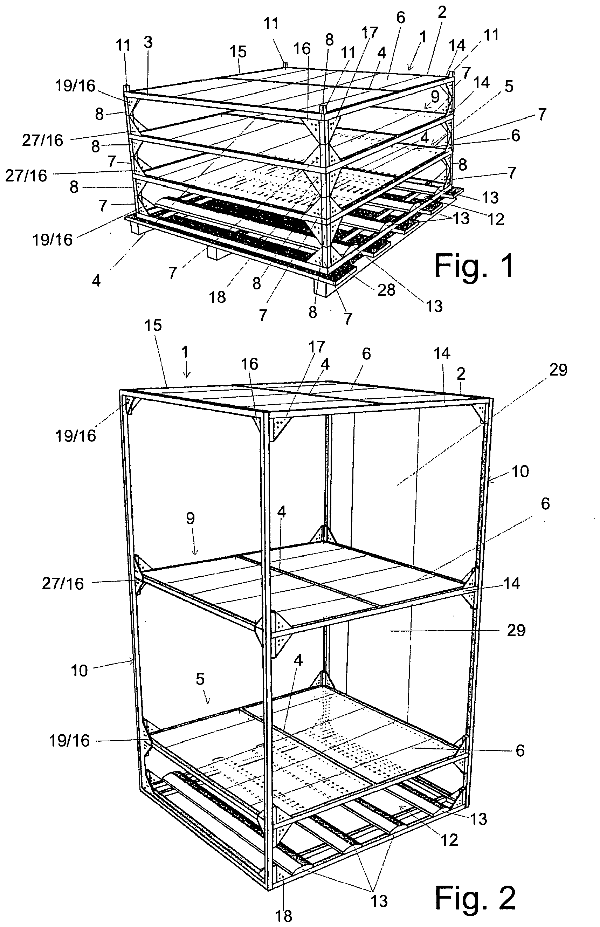

Das in den FIG 1 bis 3 dargestellte Ausführungsbeispiel eines erfindungsgemäß ausgebildeten Festbettes weist einen oberen horizontalen Rahmen 1 mit Seitenholmen 2, 3 sowie Stirnholmen 14, 15 auf. Der Rahmen 1 kann beispielsweise quadratisch ausgeführt sein und eine Seitenholmlänge von zwei Metern aufweisen. Der Rahmen 1 ist durch einen Zwischenholm 4 getrennt. Der Zwischenholm 4 und die Seitenholme 2, 3 weisen Lagerstellen, z. B. U-förmige Lagerstellen, zur Aufnahme von Trägerelementen 6 auf. An diesen Trägerelementen 6 werden textile Träger 29 für die Besiedlung von Mikroorganismen befestigt, wie aus FIG. 2 ersichtlich ist. In FIG 2 ist nur eine einzige Breitware beispielhaft eingezeichnet.

Unterhalb des oberen Rahmens 1 befindet sich ein Zwischenrahmen 9, der die gleiche Rahmenstruktur wie der obere Rahmen 1 aufweist und ebenfalls mit Trägerelementen 6 bestückt ist, um beispielsweise den Träger 29 mittels angesetzter Ösen hieran befestigen zu können. Unterhalb des Zwischenrahmens 9 befindet sich ein weiterer unterer Rahmen 5, der die gleiche Struktur wie die darüber liegenden Rahmen 1 und 9 aufweist und ebenfalls mit Trägerelementen 6 bestückt ist, die vorzugsweise von der Unterseite her in den Rahmen eingreifen und dort in Ausnehmungen in dem Zwischenholm 4 und den Seitenholmen 2, 3 gelagert sind. Unterhalb des unteren Rahmens 5 befindet sich ein Belüftungsrahmen 12 auf dem, in Längsrichtung des Festbettes verlaufend, Belüftungselemente 13 mit Düsen befestigt sind.

In FIG. 1 ist ein Stapel aus den genannten Rahmen 1, 9, 5 und 12 auf einer Palette 28 als Transporteinheit aufgebracht. Die Besonderheit besteht nun darin, dass für den Transport die Rahmen 1, 5, 9 und 12 in bestimmten Abständen zueinander übereinander gestapelt sind. Die Abstände werden gebildet durch die aufeinander stehenden, in den Eckenbereichen der Seiten- und Stirnholmen 2, 3, 14, 15 angebrachten Abstandshalter 7, 8. Dabei handelt es sich im Ausführungsbeispiel um quadratische Profilrohre. Zur Sicherstellung einer Stabilität der Abstandshalter 7, 8 und zur Bindung an den jeweiligen Rahmen 1, 5, 9 oder 12 sind zwischen den Abstandshaltern 7, 8 und den entsprechenden Holmen dreieckförmige Verstärkungen 16, 17 vorgesehen die Löcher 18 aufweisen. Jeder Rahmen 1, 9, 5 weist einen so gebildeten Fuß auf. Der Zwischenrahmen 9 und auch der untere Rahmen 5 weisen nicht nur nach unten vorstehende, Abstandshalter auf, sondern auch nach oben stehende, die zusammen mit dem Abstandshalter 7, 8 des benachbarten Rahmens den Abstand zwischen zwei Rahmen 1 und 9 bzw. 9 und 5 und 5 und 12 bilden. Dieser Abstand ist notwendig, um in die Verpackungseinheit, wie sie in FIG. 1 dargestellt ist, zugleich auch die vormontierten textilen Trägermaterialien für die Besiedelung mit Mikroorganismen nach der Vormontage in die Zwischenräume durch Faltung einbringen zu können. Das in FIG. 1 nicht dargestellte Trägermaterial, beispielsweise der in FIG. 2 dargestellte Träger 29, der in vielen parallelen Anordnungen vorgesehen sein kann oder auch verschieden ausgebildet sein kann, wird in die Zwischenräume eingefaltet und ist Bestandteil des Stapels. In den Eckenbereichen sind in die Abstandshalter 7, 8 Säulen 11 eingeführt, die einen sicheren Verbund zwischen den zusammengesetzten gestapelten Rahmen 1, 5, 9 und 12 herstellen, so dass ein so vorgefertigtes Gebinde mit einer Palette 28 zum Aufstellungsort transportiert werden kann. Am Aufstellungsort ist es lediglich erforderlich, die notwendigen Höhenabstände der Rahmen 1, 5, 9 und 12 in gewünschter Weise herzustellen, so dass sich die Träger 29 aushängen können. Diese können durch Beschwerungsmittel auch gestrafft werden.

Aus FIG. 1 ist ersichtlich, dass auf einfachste Weise der Abstand zwischen den Rahmen 1, 9; 9, 5 dadurch verändert werden kann, dass die Säulen 11 verlängert werden und zwar um das Maß, das erforderlich ist, um das Festbett so auszubilden, dass die Trägermaterialien 29 für die Besiedelung sich in dem Festbett aushängen können. Die dafür benötigten Verlängerungssäulen können ebenfalls in der Verpackungseinheit mitgeliefert werden und beispielsweise auf den oberen Rahmen 1 aufgelegt sein. Sie werden dann auf die vorstehenden Enden der Säulen 11 aufgesetzt und hieran befestigt, so dass der Rahmen 1 nach oben geschoben werden kann. Zur Fixierung in einer definierten Höhe weisen die aufgesteckten Verlängerungssäulen Bohrungen auf, so dass die Rahmen 1, 9 durch Bolzensicherungen in den Höhen fixiert werden können. Ebenso kann der untere Rahmen 5 bei entsprechender Anordnung von Fixierbohrungen oder Sackbohrungen in der Säule 11 auch nach oben verschoben und dazu gesichert werden. Es ist von Vorteil, den unteren Rahmen jedoch gleitend auf den Säulen 11 zu belassen, damit dieser als Beschwerungsrahmen wirkt und die Träger 29 straffen kann. In der untersten Ebene befindet sich der Belüftungsrahmen 12 mit den Belüftungselementen 13, die Düsen aufweisen, um Luft oder Sauerstoff oder andere Gase in das Abwasserbecken einleiten zu können, die für die aerobe oder anaerobe Abwasserreinigung benötigt werden, um die Mikroorganismen mit entsprechenden lebensnotwendigen Gasen versorgen zu können. Im Falle, dass Hohlsäulen 11 für den Aufbau eingesetzt werden, kann mindestens eine der Säulen auch für die Luftzufuhr an die Belüftungselemente verwendet werden. Dazu müssen mit der mit Druckluft beaufschlagten die Belüftungselemente 13 über Verbindungsleitungen verbunden sein.

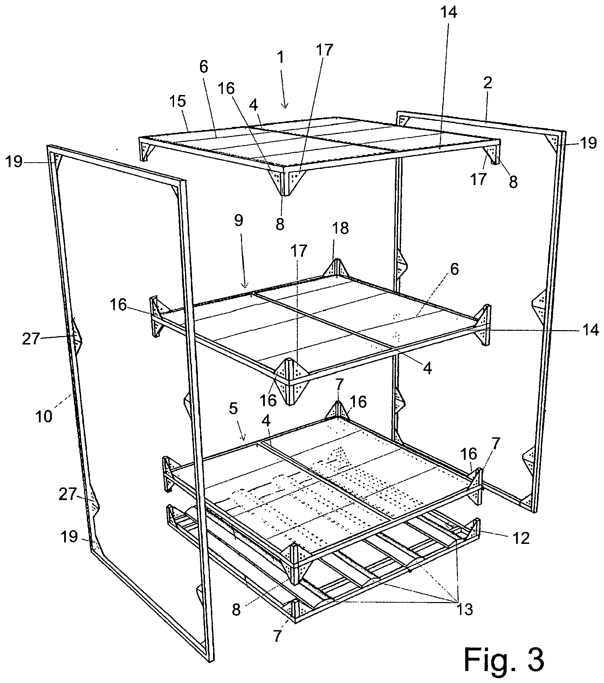

Um nun ein aufgestelltes Festbett bestimmungsgemäß in einen Abwasserbecken oder -behältnis einsetzen zu können, können an den oberen Enden der Säulen Haken oder Ösen vorgesehen sein, um mit einer Hubvorrichtung das Festbett, das beispielsweise eine Höhe von drei Metern aufweist, entsprechend umsetzen zu können. Es versteht sich von selbst, dass dabei die Transportsicherungen an der Palette 28 zunächst zu entfernen sind, um ein Abheben von der selben zu ermöglichen. In der Explosionszeichnung in FIG. 3 sind die einzelnen Rahmen dargestellt und zusätzlich anstelle von Säulen 11 seitliche Aufstellelemente 10, die eine rechteckförmige Rahmenstruktur aufweisen und mit Flanschen 27 und Eckenflanschen 19 versehen sind, an die die Verstärkungselemente 16 anschraubbar sind. Durch die Festlegung der Flansche 27 und Eckenflansche 19 werden die Abstandshöhen zwischen den Rahmen 1, 5, 9 und 12 definiert. Das Aufstellelement 10 sollte in der Mitte mittels Schwenkscharniere zusammenklappbar sein, damit es ebenfalls der Transporteinheit gemäß FIG. 1 beigelegt werden kann. Bei der Montage können beispielsweise die Aufstellelemente seitlich angefügt werden. Der obere Rahmen 1 wird hierzu angehoben und an den oberen Eckenflanschen 19 mit den Verstärkungselementen 16 angeschraubt, zu welchem Zweck kongruente Bohrungen in den Verstärkungen 16 und 17 und in den Eckenflanschen 19 vorgesehen sind. Der Zwischenrahmen 9 wird an die darunter befindlichen Flansche 27 angeschraubt, der untere Rahmen 5 an die darunter befindlichen und letztendlich der Belüftungsrahmen 12 an den unten vorgesehenen Eckenflanschen 19. Auch dies ist eine Möglichkeit, das vorgefertigte Festbett auf einfache Weise aufzustellen, da bei der Befestigung der Rahmen, zugleich auch die textilen Trägermaterialien aushängen. Mittels eines Kranes oder einer anderen Hebevorrichtung werden die Rahmen bei der Montage hochgezogen und sind über die Träger miteinander verbunden. An den seitlichen Aufstellelementen 10 können selbstverständlich obenseitig, ebenso wie an den Seiten-2, 3, und Stirnholmen 4, 5 des oberen Rahmens 1, Haken oder Ösen befestigt sein, um daran die Hebevorrichtung für das Umsetzen befestigen zu können.

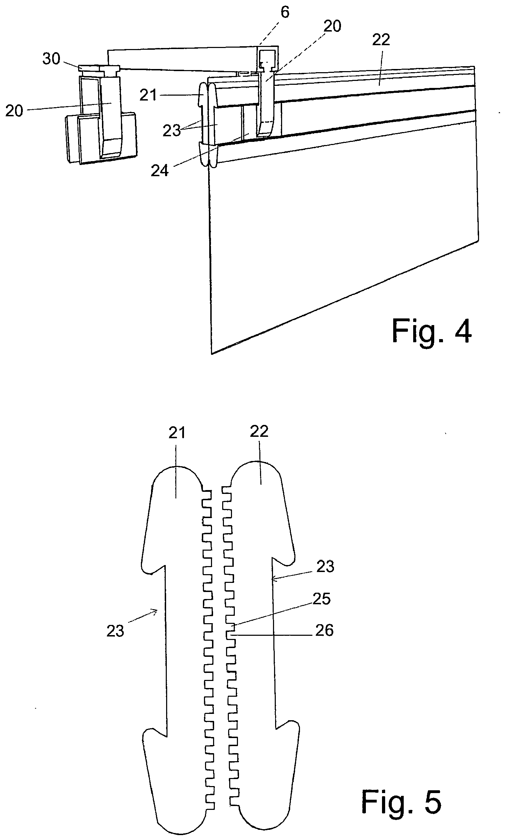

In FIG. 4 ist ein Beispiel dargestellt, wie eine Breitware 29 auf einfache Weise an einem Trägerelement 6 gelagert werden kann, das obenseitig an dem oberen Rahmen 1 vorgesehen ist. Zu diesem Zweck wird der Träger 29, der eine Breitware ist, zwischen zwei Befestigungsleisten 21, 22 gelegt, die Profilleisten aus Kunststoff sind. Diese Befestigungsleisten 21, 22 weisen schwalbenschwanzförmige Längsaufnahmen 23 auf, in die Halteplatten 24 an einem U-förmigen Halter 20 einschiebbar sind. Hierüber ist eine sichere formschlüssige Schiebeverbindung gegeben. Die beiden Befestigungsleisten 21, 22 weisen, wie aus FIG. 5 ersichtlich, gegenüberliegend Nuten 25 und Erhebungen 26 auf, die so ausgebildet sein können, dass sie ineinander drückbar sind, so dass die Breitware darin einklemmbar ist. Die Verrillung kann aber auch nur zur schnelleren Aufnahme von Erweichungswärme dienen, wenn die beiden Befestigungsleisten miteinander verschweißt werden und die Träger nur punktuell erwärmt werden dürfen. Durch diese mit runden Abschlüssen versehenen Befestigungsleisten 21, 22 ist keine Abrisskante gegeben und die Breitware kann vorgefertigt mit den Befestigungsleisten und dem aufgeschobenen Halter 20 auf einfache Weise an den Trägerelement 6 durch Einschieben des am Kopf vorgesehenen T-Trägers 30 in das C-Profil fixiert werden. Dies bietet ebenfalls eine wesentliche Zeitersparnis bei der Montage.

Ein in einer Fabrik vorgefertigtes Festbett wird zusammen mit den eingefalteten textilen Trägermaterialien zu einer Verpackungseinheit zusammengestapelt versendet und am Aufstellungsort nur noch auseinander gezogen, wobei die Rahmen in ihrer Höhe fixiert werden. Aufwendige Montageeinheiten am Aufstellungsort entfallen mithin, während der Fertigungsprozess in der Fabrik auf einfache Weise auch automatisiert werden kann. Weiterhin ist auch ein einfacher Austausch der Träger nach längerer Nutzungsdauer möglich, da in kürzester Zeit ein Austausch-Festbett installiert werden kann und das verbrauchte Trägermaterial in einer Fabrik unter Wiederverwendung der Rahmenteile gegen neue Träger austauschbar ist. Ein so erstelltes Austausch-Festbett kann dann wieder verwendet werden. Ebenso ist eine ökologisch unbedenkliche Entsorgung der verbrauchten Träger sichergestellt.

## Patentansprüche

1. Festbett für die aerobe oder anaerobe Abwasserreinigung, mindestens aufweisend einen obenseitigen horizontalen Rahmen (1) mit an gegenüberliegenden Seitenholmen (2, 3) und/oder Zwischenholmen (4) fixierten Trägerelementen (6) für die Befestigung von textilen, faltbaren, aus nicht verrottbarem Material bestehenden Trägern für Mikroorganismen, einen unteren horizontalen Rahmen (5) mit Trägerelementen (6) zum Fixieren der textilen Träger an dem unteren Rahmen, wobei als Träger textile Trägermaterialien verwendet werden, wobei die Rahmen aus einer eine gestapelte Verpackungseinheit bildenden Position, bei der das Festbett zusammen mit den eingefalteten textilen Trägermaterialien zu der Verpackungseinheit zusammengestapelt ist, in eine Gebrauchsposition aufstellbar sind, und Mittel, die die Rahmen (1, 5) mindestens im Eckenbereich verbinden, wobei die Träger in einer Vormontage vor der Faltung mittels der Trägerelemente (6) an den Seitenholmen (2, 3) und/oder Zwischenholmen (4) der Rahmen (1, 5) fixiert sind, **dadurch gekennzeichnet, dass** die Rahmen (1, 5) mindestens in den Eckenbereichen mit Abstandshaltern (7, 8) versehen sind, deren Höhe der Materialhöhe der gefalteten Träger zwischen zwei Rahmen (1, 5) entspricht, dass die Mittel seitliche Aufstellelemente (10), die eine rechteckförmige Rahmenstruktur aufweisen, oder in senkrechten Durchgangslagern in oder an den Abstandshaltern (7, 8) einsetzbare Säulen (11) sind und dass die Rahmen (1, 5) aus der eine gestapelte Verpackungseinheit bildenden Position durch Anfügen der seitlichen Aufstellelemente (10) oder durch Einbringen von langen Säulen (11) in die Durchgangslager in die Gebrauchsposition aufstellbar und in einen Abwasserbehälter einsetzbar sind.

2. Festbett nach Anspruch 1, **dadurch gekennzeichnet, dass** als Aufstellelemente (10) Aufstellrahmen seitlich mindestens an den gegenüberliegenden Seiten der horizontalen Rahmen (1, 5) anfügbar und mit den Abstandshaltern (7, 8), mit Verstärkungen (16, 17) oder den Seitenholmen (2, 3) der horizontalen Rahmen (1, 9, 5) verbindbar sind.

3. Festbett nach Anspruch 1, **dadurch gekennzeichnet, dass** mindestens in den Eckenbereichen der Rahmen (1, 5) vertikale Aufnahmen für Säulen (11) vorgesehen sind, die mindestens eine Länge aufweisen, die der Abstandsweite zwischen dem oberen und dem unteren Rahmen (1, 5) entspricht, dass die Säulen (11) in die Aufnahmen durchgehend einführbar sind, dass nach der Bestückung der Rahmen (1, 5) mit den textilen Trägern (29) der obere Rahmen (1) in Richtung eines darunter befindlichen Rahmens bei gleichzeitiger Faltung des Trägermaterials (29) absenkbar ist und mit diesem, nach Entfernen der Säulen oder dem Einsetzen kürzerer Säulen (11), eine kompakte gestapelte Versandeinheit bilden, dass am Aufstellort nach Einführen längerer Säulen oder dem Aufstecken von Säulenverlängerungen der obere Rahmen (1) auf den langen Säulen nach oben höhenverstellbar ist und dass im hochgestellten Zustand der Rahmen (1) an den langen Säulen fixierbar ist, während der untere Rahmen (5) als Beschwerungsrahmen der Träger (29) dient und auf den Säulen (11) gleitet oder in einer Spannposition der Träger (29) an den Säulen (11) fixierbar ist.

4. Festbett nach Anspruch 1, **dadurch gekennzeichnet, dass** die Säulen (11) trennbare Säulen (11) sind und aus einem unteren Abschnitt, der sich mindestens über die gesamte Höhe der Abstandshalter (7, 8) mit den Holmen (2, 3) der Rahmen (1, 5) erstreckt, und aus einem damit verbindbarem oder teleskopartig verbindbaren oberen Verlängerungsabschnitt bestehen, der an dem jeweiligen unteren Abschnitt befestigbar ist.

5. Festbett nach Anspruch 1, **dadurch gekennzeichnet, dass** zwischen dem oberen Rahmen (1) und dem unteren Rahmen (5) mindestens ein Zwischenrahmen (9) zwischengefügt ist.

6. Festbett nach Anspruch 1, **dadurch gekennzeichnet, dass** unterhalb des unteren Rahmens (5) ein Belüftungsrahmen (12) mit Belüftungselementen (13) angeordnet ist, wobei die Säulen (11) zur Bildung eines Bodenabstandes durch die Aufnahmen an den Abstandshaltern (7) an dem Belüftungsrahmen (12) hindurch steckbar sind und dass der Belüftungsrahmen (12) an den Säulen (11) befestigbar ist oder dass Seitenrahmen als Aufstellelemente (10) an den Abstandshaltern (7) befestigbar sind und diese Füße aufweisen.

7. Festbett nach Anspruch 1, **dadurch gekennzeichnet, dass** an der oberen Seite der Aufstellelemente (10), den Seitenrahmen oder den oberen Rahmen (1) überstehenden Abschnitten der Säulen (11) oder an den Stirnholmen (14, 15) des oberen Rahmens (1) Ösen oder Haken befestigt sind, an denen eine Hebevorrichtung befestigbar ist, und an mindestens einem der Holme (2, 3, 4, 14, 15) des oberen horizontalen Rahmens (1) oder an mindestens einem oberen Holm der Aufstellelemente (10), den Seitenrahmen oder an mindestens einer der Säulen (11) Wandabstandshalter zur Lageausrichtung des Festbettes in einem Abwasserbehälter oder Verbindungselemente zum Befestigen eines parallel aufgestellten Festbettes in dem Abwasserbehälter befestigbar sind.

8. Festbett nach Anspruch 1, **dadurch gekennzeichnet, dass** an den Holmen (2, 3, 14, 15) der Rahmen (1, 5) in den Eckenbereichen dreieckförmige Verstärkungen (16, 17) für die Abstandshalter (7, 8) vorgesehen sind.

9. Festbett nach Anspruch 8, **dadurch gekennzeichnet, dass** an den Zwischenrahmen (9) die dreieckförmigen Verstärkungen (16, 17) und die Abstandshalter (7, 8) oben- und untenseitig und an dem oberen Rahmen (1) untenseitig und an dem unteren Rahmen (5) obenseitig angebracht sind, und/oder die dreieckförmigen Verstärkungen (16, 17) mit Löchern (18) durchsetzt sind, an denen mindestens ein Seitenrahmen (10) mit angebrachten Eckflanschen (19) und Flanschen (27) befestigbar ist.

10. Festbett nach Anspruch 1, **dadurch gekennzeichnet, dass** die Säulen (11) Hohlprofilsäulen sind, die untenseitig mit Belüftungselementen (13) verbindbar sind und obenseitig Drucklufteinlässe aufweisen

11. Festbett nach Anspruch 10, **dadurch gekennzeichnet, dass** die Säulen (11) im freien Bereich zwischen den Horizontalrahmen (1, 5) mit Löchern versehen sind, durch die Luft oder ein Gas in den Abwasserbehälter leitbar ist.

12. Festbett nach Anspruch 1, **dadurch gekennzeichnet, dass** der Träger (29) aus nicht verrott barem Material besteht und ein kordel-, band- oder schlauchförmiges Textil oder eine Breitware mit eingewirkten Gewebeschläuchen ist und/oder aus Einzelgewebeschläuchen oder aus in Gruppen angeordneten Gewebeschläuchen oder aus ineinander gesteckten textilen Gewebeschläuche zusammengesetzt ist oder besteht oder eine Breitware aus Besiedelungsstreifen für die Mikroorganismen ist und diese voneinander trennende Abstandsstreifen ist.

13. Festbett nach Anspruch 12, **dadurch gekennzeichnet, dass** an den Trägern (29) aus nicht verrottbarem Material Ösen zum Einziehen der Trägerelemente (6) angebracht sind oder der textile Träger (29) Ösen bildend verlegt und vernäht ist.

14. Festbett nach Anspruch 12, **dadurch gekennzeichnet, dass** die Trägerelemente (6) aus miteinander verbindbaren Profilleisten bestehen, bei deren Zusammensetzen die Trägermaterialien eingeklemmt oder beim Verschweißen der Profilleisten mit einschweißbar sind.

15. Festbett nach Anspruch 12 oder 13, **dadurch gekennzeichnet, dass** als Trägerelemente (6) C-Profile oder andere Schienen vorgesehen sind, an oder in die Halter (20) für Befestigungsleisten (21, 22) mit einem T-Profil oder mit hakenförmigen Elementen befestigbar und/oder einschiebbar sind, an welchen Befestigungsleisten (21, 22) das Trägermaterial befestigt ist.

16. Festbett nach Anspruch 15, **dadurch gekennzeichnet, dass** die Befestigungsleisten (21, 22) aus zwei miteinander verbindbaren Profilleisten bestehen, die miteinander unlösbar oder lösbar verbindbar sind und beim Verbinden das Trägermaterial einklemmen, und die Profilleisten (21, 22) Längsaufnahmen (23) aufweisen, in die eine Halteplatte (24) an dem Halter (20) einschiebbar ist.

17. Festbett nach einem der Ansprüche 15 oder 16, **dadurch gekennzeichnet, dass** die Profilleisten (21, 22) aus Kunststoff bestehen, dass sie längs verlaufende oder senkrechte Kammstrukturen mit Nuten (25) und darin eingreifende Erhebungen (26) an der korrespondierenden Profilleiste oder ein ineinander greifendes Musterraster (26) aufweisen und dass die Profile nach dem Einlegen des Trägermaterials miteinander verpressbar und/oder verschweißbar sind.

## Claims

1. Fixed bed for aerobic or anaerobic wastewater purification, at least comprising an upper horizontal frame (1) having support elements (6) fixed to opposite side rails (2, 3) and/or intermediate rails (4) for fastening textile, foldable, non-degradable supports for microorganisms, a lower horizontal frame (5) having support elements (6) for fixing the textile supports to the lower frame, wherein textile support materials are used as supports, wherein the frames can be assembled into an operating position from a position forming a stacked packaging unit, in which the fixed bed along with the folded textile support materials is stacked together to a packaging unit, and means, which connect the frames (1, 5) in at least the corner region, wherein the supports are fixed to the side rails (2, 3) and/or intermediate rails (4) of the frames (1, 5) by means of the support elements (6) in a pre-assembly step prior to folding, **characterized in that** the frames (1, 5) are provided with spacers (7, 8) at least in the corner regions, the height of said spacers corresponding to the material height of the folded supports between two frames (1, 5), that the means are lateral mounting elements (10) which comprise a rectangular frame structure, or columns (11) insertable into vertical through-bearings in or on the spacers (7, 8) and that the frames (1, 5) can be assembled into an operating position from a position forming a stacked packaging unit by attaching the lateral mounting elements (10) or by inserting long columns (11) into the through-bearings, and can be inserted into a waste water tank.

2. Fixed bed according to claim 1, **characterized in that** mounting frames can be laterally attached at least on the opposite sides of the horizontal frames (1, 5) as mounting elements (10) and can be connected to the spacers (7, 8) with reinforcements (16, 17) or the side rails (2, 3) of the horizontal frames (1, 9, 5).

3. Fixed bed according to claim 1, **characterized in that** vertical receptacles for columns (11) are provided at least in the corner regions of the frames (1, 5), which comprise a length that is at least as long as the width of the spacing between the upper and the lower frame (1, 5), that the columns (11) can be inserted continuously into the receptacles, that, after the frames (1, 5) have been fitted with the textile supports (29), the upper frame (1) can be lowered towards a frame therebelow with simultaneous folding of the support material (29) and, after removing the columns or inserting shorter columns (11), can form a compact stacked shipping unit with said support material, that, after inserting longer columns or attaching column extensions, the upper frame (1) can be adjusted upwards on the long columns at the installation site and that the raised frame (1) can be fixed to the long columns, whilst the lower frame (5) serves as a weighting frame of the supports (29) and slides on the columns (11) or can be fixed to the columns (11) in a position where the supports (29) are stretched taut.

4. Fixed bed according to claim 1, **characterized in that** the columns (11) are separable columns (11) and comprise a lower portion, which extends at least over the total height of the spacers (7, 8) with the rails (2, 3) of the frames (1, 5), and an upper extension portion that can be connected or telescopically connected thereto and which can be fastened to the respective lower portion.

5. Fixed bed according to claim 1, **characterized in that** at least one intermediate frame (9) is interposed between the upper frame (1) and the lower frame (5).

6. Fixed bed according to claim 1, **characterized in that** an aeration frame (12) having aeration elements (13) is arranged underneath the lower frame (5), wherein the columns (11) can be inserted through the receptacles on the spacers (7) on the aeration frame (12) to create a spacing to the base and that the aeration frame (12) can be fastened to the columns (11) or that side frames comprising feet can be fastened to the spacers (7) as mounting elements (10).

7. Fixed bed according to claim 1, **characterized in that** lugs or hooks are fastened to the top side of the mounting elements (10), the portions of the columns (11) protruding the side frame or the upper frame (1) or on the end rails (14, 15) of the upper frame (1), to which a lifting apparatus can be fastened, and wall spacers to position the fixed bed in a wastewater tank or connecting elements for fixing a parallel-mounted fixed bed in the wastewater tank can be fastened to at least one of the rails (2, 3, 4, 14, 15) of the upper horizontal frame (1) or to at least one upper rail of the mounting elements (10), the side frames or to at least one of the columns (11).

8. Fixed bed according to claim 1, **characterized in that** triangular reinforcements (16, 17) are provided for the spacers (7, 8) in the corner regions on the rails (2, 3, 14, 15) of the frames (1, 5).

9. Fixed bed according to claim 8, **characterized in that** the triangular reinforcements (16, 17) and the spacers (7, 8) are attached to the top side and bottom side of the middle frame (9), to the bottom side of the upper frame (1) and to the top side of the lower frame (5) and/or the triangular reinforcements (16, 17) are perforated with holes (18), to which at least one side frame (10) having attached corner flanges (19) and flanges (27) can be fastened.

10. Fixed bed according to claim 1, **characterized in that** the columns (11) are hollow profile columns that can be connected to the aeration elements (13) on the bottom and have compressed air inlets on top.

11. Fixed bed according to claim 10, **characterized in that** the columns (11) are provided with holes in the free area between the horizontal frames (1, 5), through which the air or a gas can be introduced into the wastewater tank.

12. Fixed bed according to claim 1, **characterized in that** the support (29) is made of non-degradable material and is a cord-like, ribbon-like or tubular textile or a broadcloth with interwoven textile tubes and/or consists of individual textile tubes or textile tubes arranged in groups or textile tubes inserted into each other or is a broadcloth consisting of colonization strips for microorganisms and spacer strips separating these from each other.

13. Fixed bed according to claim 12, **characterized in that** lugs are attached to the non-degradable supports (29) for drawing in the support elements (6) or the textile support (29) is arranged and sewn to form lugs.

14. Fixed bed according to claim 12, **characterized in that** the support elements (6) consist of interconnectable profile strips and when they are assembled, the support materials are clamped or, when the profile strips are welded, the support materials can be welded in.

15. Fixed bed according to claim 12 or 13, **characterized in that** C-profiles or other rails are provided as support elements (6), onto which or into which holders (20) for the fastening strips (21, 22) can be fastened and/or inserted with a T-profile or hook-like elements, the support material being fastened to said fastening strips (21, 22).

16. Fixed bed according to claim 15, **characterized in that** the fastening strips (21, 22) consist of two interconnectable profile strips, which can be permanently or detachably interconnected and which clamp the support material when connected, and the profile strips (21, 22) comprise longitudinal receptacles (23), into which a holding plate (24) on the holder (20) can be inserted.

17. Fixed bed according to one of the claims 15 or 16, **characterized in that** the profile strips (21, 22) are made of plastic material, that they have longitudinal or perpendicular comb structures with grooves (25) and peaks (26) that engage with said grooves on the corresponding profile strip or have an interlocking grid pattern (26) and that the profiles can be pressed together and/or welded together after the insertion of the support material.

## Revendications

1. Lit fixe pour l'épuration aérobie ou anaérobie des eaux usées, présentant au moins un cadre horizontal supérieur (1) pourvu d'éléments de support (6) fixés à des montants latéraux (2, 3) et/ou des montants intermédiaires (4) opposés permettant de fixer des supports textiles pliables constitués d'un matériau imputrescible pour microorganismes, un cadre horizontal inférieur (5) pourvu d'éléments de support (6) permettant de fixer les supports textiles au cadre inférieur, des matériaux de support textiles étant utilisés en tant que supports, les cadres pouvant être montés dans une position d'utilisation depuis une position formant une unité de conditionnement empilée, position dans laquelle le lit fixe est empilé avec les matériaux de support textiles repliés vers l'unité de conditionnement, et des moyens reliant les cadres (1, 5) au moins dans la zone angulaire, les supports étant fixés, dans un prémontage avant le pliage, aux montants latéraux (2, 3) et/ou aux montants intermédiaires (4) des cadres (1, 5) au moyen des éléments de support (6), **caractérisé en ce que** les cadres (1, 5) sont pourvus, au moins dans les zones angulaires, d'entretoises (7, 8) dont la hauteur correspond à la hauteur de matériau des supports pliés entre deux cadres (1, 5), **en ce que** les moyens sont des éléments de montage latéraux (10) présentant une structure de cadre rectangulaire ou des colonnes (11) insérables dans ou sur les entretoises (7, 8) dans des paliers transitoires verticaux, et **en ce que** les cadres (1, 5) peuvent être montés depuis la position formant une unité de conditionnement empilée, dans la position d'utilisation, par l'ajout des éléments de montage latéraux (10) ou par l'introduction de colonnes (11) longues dans les paliers transitoires et peuvent être insérés dans un réservoir d'eaux usées.

2. Lit fixe selon la revendication 1, **caractérisé en ce que** des cadres de montage peuvent être ajoutés latéralement en tant qu'éléments de montage (10) au moins sur les côtés opposés des cadres horizontaux (1, 5) et peuvent être raccordés aux entretoises (7, 8) avec des renforts (16, 17) ou les montants latéraux (2, 3) des cadres horizontaux (1, 9, 5).

3. Lit fixe selon la revendication 1, **caractérisé en ce qu'**il est prévu, pour les colonnes (11), au moins dans les zones angulaires des cadres (1, 5), des logements verticaux présentant au moins une longueur correspondant à l'espacement entre les cadres supérieur et inférieur (1, 5), **en ce que** les colonnes (11) peuvent être introduites en continu dans les logements, **en ce que**, après l'installation des supports textiles (29) sur les cadres (1, 5), le cadre supérieur (1) peut être abaissé en direction d'un cadre de niveau inférieur en pliant simultanément le matériau de support (29) et forme avec celui-ci, après le retrait des colonnes ou l'insertion de colonnes (11) plus courtes, une unité de transport empilée compacte, **en ce que**, sur le lieu de montage, le cadre supérieur (1) peut être réglé en hauteur vers le haut sur les colonnes longues après l'introduction de colonnes plus longues ou l'insertion d'extensions de colonnes, et **en ce qu'**une fois surélevé, le cadre (1) peut être fixé sur les colonnes longues, tandis que le cadre inférieur (5) sert de cadre de lestage aux supports (29) et glisse sur les colonnes (11) ou peut être fixé sur les colonnes (11) dans une position de serrage des supports (29).

4. Lit fixe selon la revendication 1, **caractérisé en ce que** les colonnes (11) sont des colonnes (11) séparables et consistent en une section inférieure s'étendant au moins sur toute la hauteur des entretoises (7, 8) avec les montants (2, 3) des cadres (1, 5), et en une section d'extension supérieure raccordable ou téléscopiquement raccordable à celle-ci et qui peut être fixée à la section inférieure respective.

5. Lit fixe selon la revendication 1, **caractérisé en ce qu'**au moins un cadre intermédiaire (9) est interposé entre le cadre supérieur (1) et le cadre inférieur (5).

6. Lit fixe selon la revendication 1, **caractérisé en ce qu'**un cadre de ventilation (12) pourvu d'éléments de ventilation (13) est disposé sous le cadre inférieur (5), les colonnes (11) pouvant être insérées à l'intérieur sur le cadre de ventilation (12) pour former une distance par rapport au sol par les logements au niveau des entretoises (7), et **en ce que** le cadre de ventilation (12) peut être fixé sur les colonnes (11) ou **en ce que** des cadres latéraux peuvent être fixés en tant qu'éléments de montage (10) sur les entretoises (7), celles-ci présentant des pieds.

7. Lit fixe selon la revendication 1, **caractérisé en ce** des sections saillantes des colonnes (11) sont fixées sur la face supérieure des éléments de montage (10), sur les cadres latéraux ou sur le cadre supérieur (1), ou des oeillets ou des crochets sont fixés sur les montants avant (14, 15) du cadre supérieur (1), permettant d'y fixer un dispositif de levage, et des entretoises de paroi peuvent être fixées sur au moins l'un des montants (2, 3, 4, 14, 15) du cadre horizontal supérieur (1) ou sur au moins un montant supérieur des éléments de montage (10), sur les cadres latéraux ou sur au moins l'une des colonnes (11) pour orienter le lit fixe dans un réservoir d'eaux usées, ou des éléments de raccordement peuvent être fixés pour fixer un lit fixe monté en parallèle dans le réservoir d'eaux usées.

8. Lit fixe selon la revendication 1, **caractérisé en ce que** des renforts triangulaires (16, 17) sont prévus pour les entretoises (7, 8) sur les montants (2, 3, 14, 15) des cadres (1, 5) dans les zones angulaires.

9. Lit fixe selon la revendication 8, **caractérisé en ce que** les renforts triangulaires (16, 17) et les entretoises (7, 8) sont fixés sur les faces supérieure et inférieure sur le cadre intermédiaire (9), sur la face inférieure sur le cadre inférieur (1) et sur la face supérieure sur le cadre inférieur (5), et/ou les renforts triangulaires (16, 17) sont percés d'orifices (18) au niveau desquels au moins un cadre latéral (10) peut être fixé au moyen de brides d'angle (19) et de brides (27) montés.

10. Lit fixe selon la revendication 1, **caractérisé en ce que** les colonnes (11) sont des colonnes à profil creux qui peuvent être raccordées sur leur face inférieure avec les éléments de ventilation (13) et présentent, sur leur face supérieure, des entrées d'air sous pression.

11. Lit fixe selon la revendication 10, **caractérisé en ce que** les colonnes (11) sont pourvues, dans l'espace libre entre les cadres horizontaux (1, 5), d'orifices à travers lesquels l'air ou un gaz peut être amené dans le réservoir d'eaux usées.

12. Lit fixe selon la revendication 1, **caractérisé en ce que** le support (29) est constitué d'un matériau imputrescible et est un textile sous forme de cordon, de ruban ou de tube ou un élément large pourvu de flexibles tissés incorporés et/ou est composé ou constitué de flexibles tissés individuels ou de flexibles tissés organisés en groupes ou de flexibles tissés en textile imbriqués entre eux, ou est un élément large fait de bandes de colonisation pour les micro-organismes, ledit élément large étant des bandes d'espacement séparées les unes des autres.

13. Lit fixe selon la revendication 12, **caractérisé en ce que** des oeillets sont montés aux supports (29) en matériau imputrescible pour accueillir les éléments de support (6) ou le support textile (29) formant des oeillets est posé et cousu pour former.

14. Lit fixe selon la revendication 12, **caractérisé en ce que** les éléments de support (6) consistent en des bandes profilées raccordables entre elles, les matériaux de support étant serrés lors de l'assemblage desdites bandes profilées ou soudés avec elles lors du soudage desdites bandes profilées.

15. Lit fixe selon la revendication 12 ou 13, **caractérisé en ce que** des profilés en C ou d'autres rails sont prévus en tant qu'éléments de support (6), qui peuvent être fixés et/ou insérés sur ou dans le support de fixation (20) pour bandes de fixation (21, 22) avec un profilé en T ou avec des éléments en forme de crochets, le matériau de support étant fixé sur lesdites bandes de fixation (21, 22).

16. Lit fixe selon la revendication 15, **caractérisé en ce que** les bandes de fixation (21, 22) sont constituées de deux bandes profilées raccordables entre elles, qui peuvent être raccordées entre elles de manière indissociable ou dissociable et serrent le matériau de support lors du raccordement, et les bandes profilées (21, 22) présentent des logements longitudinaux (23) dans lesquels une plaque de maintien (24) peut être insérée sur le support de fixation (20).

17. Lit fixe selon l'une des revendications 15 ou 16, **caractérisé en ce que** les bandes profilées (21, 22) sont constituées de matière plastique, **en ce qu'**elles présentent des structures en peigne longitudinales ou verticales pourvues de rainures (25) et d'élévations (26) s'engageant dans celles-ci sur la bande profilée correspondante, ou de trames de motifs (26) s'imbriquant entre elles, et **en ce que** les profilés sont pressés ensemble et/ou soudés ensemble après l'insertion du matériau de support.
